# EUROPEAN PATENT APPLICATION

(11) **EP 0 709 156 A1**
(43) Date of publication of application: **01.05.1996**
(21) Application number: 95307262.6
(22) Date of filing: 12.10.1995
(51) Int. Cl.: B23D 49/16, B23Q 9/00

(54) **Jigsaw**

(30) Priority: 28.10.1994 GB 9421769
(71) Applicant: Black & Decker Inc., Newark Delaware 19711 (US)
(72) Inventor: Cooper, Vince, Durham City, DH1 4DF (GB)
(74) Representative: Moffat, John Andrew

(57) **Abstract**

A jigsaw (10) includes a wheel (22) acting as a guide member for cutting a workpiece. A saw blade (28) moves with a reciprocating motion through a groove (26) in the wheel (22). Use of a wheel (22) as a guide member assists with ease of use of the jigsaw (10) in moving over the workpiece to be cut.

## Description

The present invention relates to jigsaws and has particular, although not exclusive, relevance to jigsaws which are used to cut elaborate and intricate patterns in a workpiece.

Conventional jigsaws comprise a body within which is housed a motor to impart a reciprocating motion to a shaft which carries a saw blade. The body carries a shoe which is arranged to sit on the workpiece during cutting. The shoe serves the dual purpose of maintaining the saw blade in a steady position in relation to the workpiece and also, because the saw blade moves with reciprocating motion through a space in the shoe, providing a guide with which to cut the necessary patterns in the workpiece.

The underside of the shoe, which sits on the workpiece during cutting, is generally planar. This is because the entire jigsaw may then be slid across the workpiece during cutting.

There exist various shortcomings with such a shoe, however. One such shortcoming is due to the planar surface of the shoe presented to the workpiece. It may often be a difficult matter to control accurately the line of cutting because a reciprocating motion imparted to the saw blade inherently causes a lot of vibration and thus the shoe tends to bounce or skid across the workpiece during cutting. The net result of this is skidding or bouncing across the surface of the workpiece thus making accurate control of cutting somewhat problematical.

A further problem is that in order to move the jigsaw across the workpiece, it is necessary to slide the shoe. This involves dynamic frictional forces which thus also make accurate control difficult. This is particularly so when such sliding is at low speed near the boundary between static and dynamic friction.

It is thus an object of the present invention to at least alleviate the above-mentioned shortcomings by providing a jigsaw with an alternative to the known shoe such that more control during operation of the jigsaw is available to the user.

Hence, according to the present invention there is provided a jigsaw for sawing a workpiece comprising: a body, a shaft for receiving a saw blade, a motor housed within the body and coupled to the shaft, the motor arranged to provide a reciprocating motion to the shaft, and a guide member comprising a pair of co-axial wheels or rollers spaced such that movement of the received saw blade occurs substantially between the wheels or rollers, characterised in that the pair of wheels or rollers may be locked together so as to rotate as one. This enables the entire jigsaw to be guided across the workpiece more easily and with more control than with the known devices because there will always be static frictional forces between the point of contact between the guide member and the workpiece as opposed to dynamic frictional forces. In effect, the jigsaw can be rolled across the workpiece rather than slid across.

Preferably the wheels or rollers of the pair have non-linear side walls thereby to permit bevel sawing.

Usefully, the periphery of the pair of wheels or rollers may be coated with or formed from a non-slip material which causes a high force of friction between the at least one wheel or roller and the workpiece abutted thereby.

The present invention will now be described, by way of example only, with reference to the accompanying drawings, of which;
Figure 1 illustrates schematic side and underside views of a known jigsaw device including the conventional shoe guide member;
Figure 2 shows a perspective view of one embodiment of a jigsaws including a guide member according to the present invention;
Figure 3 illustrates schematically a sectional view of the jigsaw of Figure 2 ,
Figures 4 and 5 each show a perspective view of alternative embodiments of jigsaws including guide members according to the present invention;
Figure 6 illustrates schematically another embodiment of the present invention, and
Figure 7a illustrates a sectional view of a wheel-locking mechanism and Figure 7b shows a view of one wheel taken along line X-X of Figure 7a.

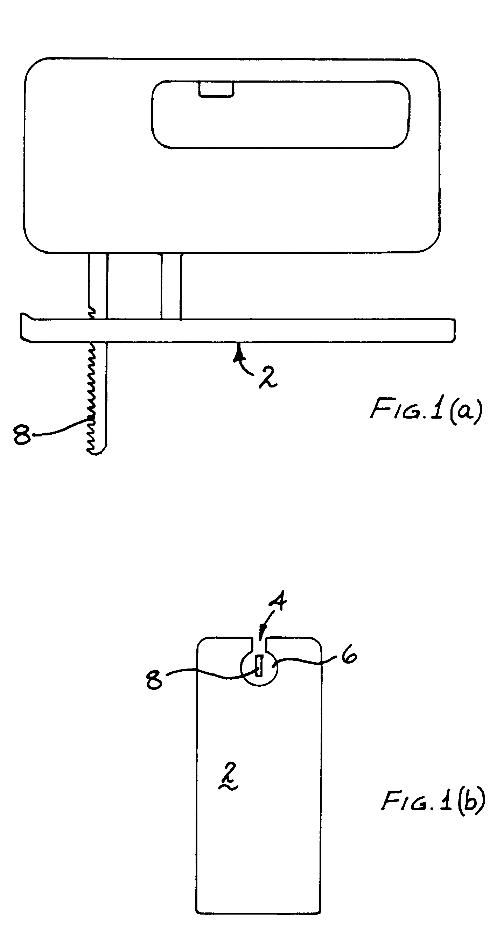

Referring firstly to Figure 1, it can be seen that a conventional jigsaw includes a guide member; shoe 2. The shoe 2 is formed with a slit 4 adjacent one edge and the slit grows to become a cavity 6 through which a saw blade 8 passes during use of the jigsaw.

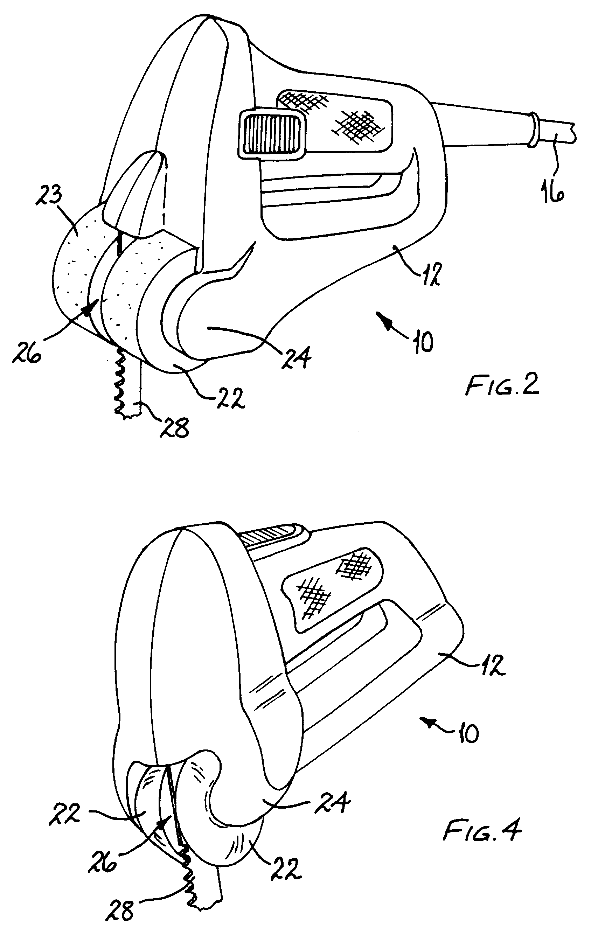

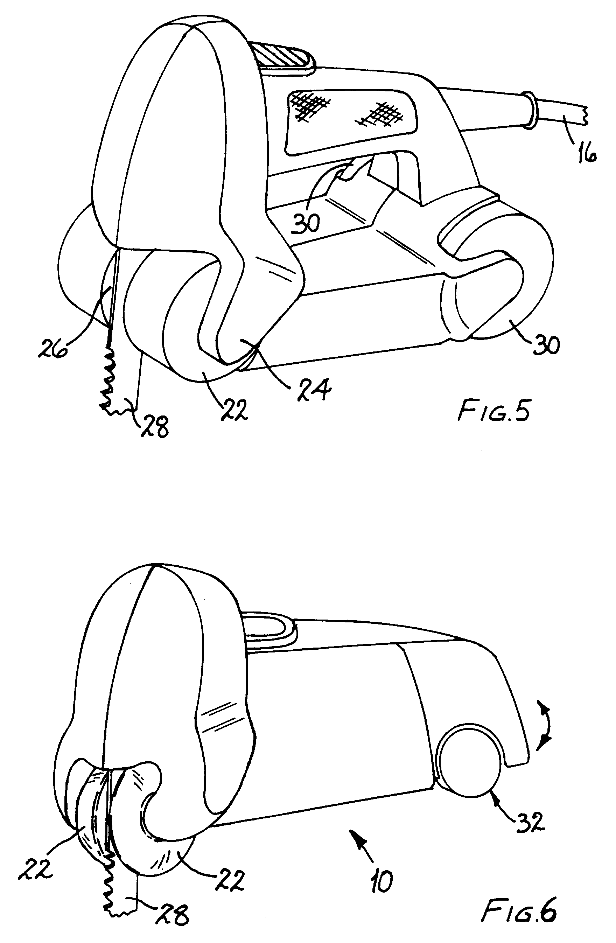

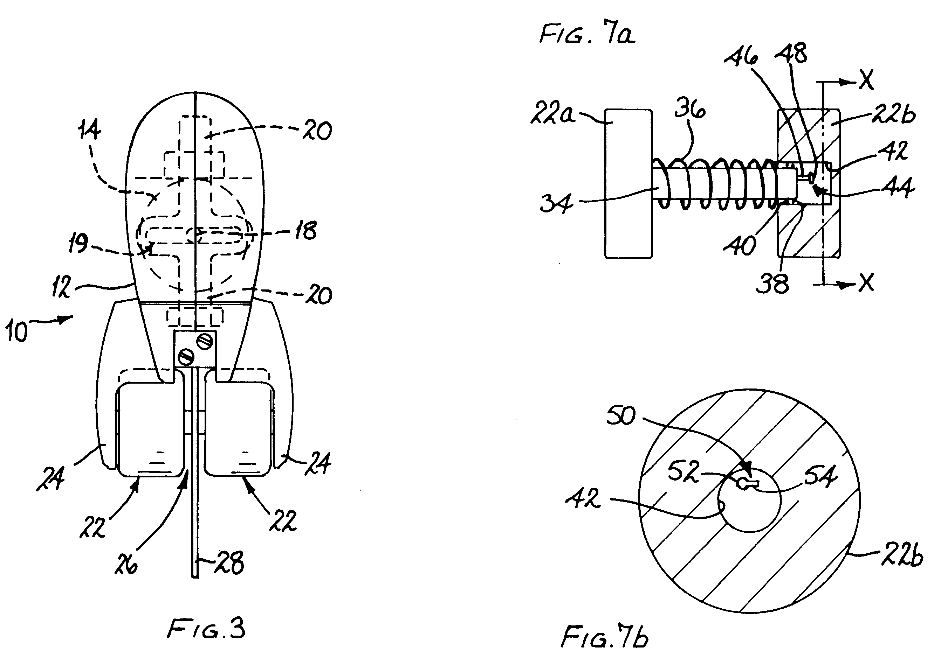

Turning now to Figures 2 and 3, it will be seen that the jigsaw, shown generally as 10 comprises a body, here a plastics clamshell 12, housed within which is an electric motor 14. The motor 14 receives power via mains cable 16, although a cordless jigsaw having an integral battery pack to supply power to the motor 14 is clearly within the scope of the present invention. The output shaft 18 of the motor 14 is coupled to a shaft 20 and is arranged to impart reciprocating motion to the shaft 20 via a yoke 19 and a flywheel with off-centre pin mechanism. The yoke 19 is fixed to the shaft 20 such the movement of the yoke 19 causes sympathetic movement of the shaft 20 and the off-centre pin of the flywheel engages with the yoke. Such a mechanism is common in the art and so detailed reference to the same will not be made.

One end of the shaft 20 is configured to receive a saw blade presented thereto. This end of the shaft has a recess into which a saw blade may be clamped by a screw.

It can thus be seen that, as with conventional jigsaws, on operation of the motor 14, the shaft 20 exhibits a reciprocating motion thus causing the saw blade 28 attached thereto to exhibit the same motion which is utilised to cut a workpiece.

It can also be seen that, in contrast to the conventional jigsaw as shown in Figure 1, the jigsaw 10 of Figures 2 and 3 has no shoe 2. Instead the guide member here is a pair of wheels 22. The wheels 22 are mounted between two projections (only one shown) 24 of the clamshell 12 and has a groove 26 formed therein. The groove 26 is formed midway between the two axial ends of the wheels 22 and extends radially inward from the periphery toward the centre of each wheel. The groove 26 exists in order to provide a slot within which a saw blade 28 may move in its reciprocating action when clamped to the shaft 20.

The wheels 22 can rotate freely about their common axis such that, in use of the jigsaw 10, the user simply "rolls" the wheels 22 across the workpiece. There will, however, be vibrations due to the reciprocating motion of the shaft 20 and the movement of both the saw blade 28 and the motor 14. These vibrations, as in the prior art, tend to cause a loss of control during cutting operations. Unlike the prior art, though, this problem can be alleviated by causing the periphery of each wheel 22 to bear (or form each entire wheel 22 from) a non-slip material such as glass-paper or rubber. In the embodiment shown at Figure 2, each wheel 22 is coated with a layer of rubber 23. Clearly, with the present invention, this has the effect of holding that part of the wheel 22 which contacts the workpiece firmly in touch therewith, whilst in the known jigsaw, such a non-slip coating would actually prevent movement of the shoe 2 across the workpiece.

It will be understood that the pair of wheels 22 are a composite structure formed from two individual wheels, one on each side of the groove 26 (in this case the groove 26 would be formed by the space between the two wheels). The two wheels of the pair can be locked together (so as to rotate as one) or unlocked (so that each wheel may rotate independently). This provides the advantage that, with the wheels locked together, cutting in a straight line is possible with ease and turning of the jigsaw 10 during use is difficult (about a pivot point defined by the groove 26) because the wheels may only rotate as one. Alternatively, when the wheels are unlocked, cutting in curves or round bends is easier due to the fact that the wheels may freely rotate independently. Thus when cutting on a curve, one wheel will rotate at a greater rate than the other.

By referring to Figures 7, an example of a suitable type of locking means for the wheels 22 is illustrated. It will be understood that, for the purposes of clarity, only the wheels 22 and their interconnecting axle are illustrated - the remainder of the jigsaw not being shown.

One of the wheels 22a is rigidly mounted to the axle 34. The other wheel 22b is mounted on the other end of the axle 34 having both rotational movement thereabout and axial movement therealong. Clearly the wheel 22b must be able to rotate about the axle 34 and the axial movement of the wheel 22b enables the locking mechanism to operate as described below.

Around the axle 34 and between the pair of wheels 22 is a compression spring 36. The spring acts to urge the wheel 22b away from the wheel 22a along the axle 34. It can be seen that the wheel 22b is prevented from being detached from the end of the axle 34 and inner periphery of a hole 42 (in the wheel 22b within which the axle 34 sits) respectively. Hence the limits of axial movement of the wheel 22b is dictated by the stops 38 and 40 at one extreme and abutment of the end of the axle 34 with the bottom of the hole 42 at the other extreme.

The axle 34 carries, at its end within the hole 42, an off-axis peg 44. The peg comprises a stalk 46 having a bulbous end 48. In order to lock the pair of wheels together so as to rotate as one, the user pushes the wheels towards each other. It can be seen that the wheel 22b has a channel 50 therewithin formed into a keyhole shape. In this manner the bulbous end 48 of peg 44 may pass through the bulbous portion 52 of the channel 50. However, when the user (whilst maintaining sufficient force against the action of the spring 36 in order not to allow the wheels of the pair to move away from each other) twists the wheel 22b so as to rotate it slightly in a direction causing the bulbous portion 48 to slide allow the narrow restriction 54 of the channel 50, then the wheels 22 will be locked together when the user releases the axial force applied. To unlock the wheels, the reverse of the above is necessary.

Such a locking mechanism will be readily understood by those skilled in the art and so further reference thereto will not be made within.

Considering now Figure 4 wherein similar components to those described above are similarly referenced, the jigsaw 10 is of the cordless variety and the wheels 22 have non-linear, here curved, rather than straight side walls. This feature allows the user of the jigsaw 10 to angle the saw blade 28 in relation to the workpiece to be cut such that the jigsaw may perform bevel cutting.

Figure 5, also numbered with similar reference numerals, illustrates a jigsaw 10 in which the guide member comprises two pairs of wheels 22 and 30. The additional pair of wheels 30 compared to the embodiments described above allow more stable cutting of a workpiece whilst still employing all the benefits of the present invention over the known jigsaw with its shoe.

In the foregoing it will be understood that wheels and rollers are synonymous and their only important feature being that their outer surface be circular. Additionally or alternatively the pairs of wheels could be covered by a band of material so that caterpillar tracks were used.

It will be appreciated that the present invention provides a jigsaw suitable for use with any of the wheels or rollers or tracks mentioned hereabove. It is thus within the scope of the present invention to provide for a jigsaw with the capability to interchange any of these wheels or rollers on the same jigsaw unit. For example, Figure 6 shows a further embodiment of the present invention could combine the front wheels 22 as shown in figure 4 which have curved side walls, with a single rear roller 32. This rear roller is pivotable thereby to enable the entire jigsaw to be held at a predetermined distance above a planar workpiece, whilst permitting bevel cutting.

## Claims

1. A jigsaw for sawing a workpiece comprising: a body. a shaft for receiving a saw blade; a motor housed within the body and coupled to the shaft, the motor arranged to provide a reciprocating motion to the shaft, and a guide member comprising a pair of co-axial wheels or rollers spaced such that movement of the received saw blade occurs substantially between the wheels or rollers, characterised in that the pair of wheels or rollers may be locked together so as to rotate as one.

2. A jigsaw according to Claim 1 wherein the wheels or rollers of the pair have non-linear side walls thereby to permit bevel sawing.

3. A jigsaw according to either Claim 1 or Claim 2 wherein the wheels or rollers of the pair carry or are formed from, a non-slip material.

4. A jigsaw according to any one of the preceding Claims wherein a further wheel or wheels is attached to the jigsaw.
